Europäisches Patentamt

European Patent Office

Office européen des brevets

(19)

(11) Publication number: **0 222 454 B1**

# EUROPEAN PATENT SPECIFICATION

(12)

(45) Date of publication of patent specification: **29.09.93**  (51) Int. Cl.5: **C08G 67/02**

(21) Application number: **86201946.0**

(22) Date of filing: **06.11.86**

The file contains technical information submitted
after the application was filed and not included in
this specification

(54) **Novel catalyst compositions and process for copolymerizing ethene and carbon monoxide.**

(30) Priority: **14.11.85 NL 8503135**

(43) Date of publication of application:
**20.05.87 Bulletin 87/21**

(45) Publication of the grant of the patent:
**29.09.93 Bulletin 93/39**

(84) Designated Contracting States:
**AT BE CH DE ES FR GB IT LI LU NL SE**

(56) References cited:
**EP-A- 0 121 965**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Drent, Eit
Badhuisweg 3
NL-1031 CM Amsterdam(NL)**
Inventor: **Wife, Richard Lewin
Badhuisweg 3
NL-1031 CM Amsterdam(NL)**

Rank Xerox (UK) Business Services
(3.10/3.6/3.3.1)

## Description

The invention relates to novel compositions that may be used as catalysts for the preparation of copolymers of carbon monoxide with ethene and, if appropriate, also one or more other olefinically unsaturated hydrocarbons.

High molecular weight linear polymers of carbon monoxide and ethene in which the monomer units occur in alternating order (and which polymers therefore consist of units of the formula $-CO-(C_2H_4)-$), can be prepared by using catalyst compositions known in the art and comprising:

(a) a compound of a Group VIII metal chosen from palladium, cobalt and nickel,

b) an anion of an acid with a pKa of less than 6, and

c) a bidentate ligand of the general formula $R^1R^2-M-R-M-R^3R^4$, wherein M represents phosphorus, arsenic or antimony, R is a bivalent organic bridging group containing two or three carbon atoms in the bride and $R^1$, $R^2$, $R^3$ and $R^4$ represent hydrocarbon groups.

Application of these catalyst compositions to a monomer mixture which, in addition to carbon monoxide and ethene, comprises one or more other polymerizable hydrocarbons (A) leads to the formation of polymers with units of the formula $-CO-(C_2H_4)-$ and units of the general formula $-CO-A-$ occurring randomly distributed over the polymer chains. The structures of the copolymes and the 'terpolymers' only differ in that in the case of the 'terpolymers' a group -A- is encountered at random places in the polymer instead of a $-(C_2H_4)-$-group.

In the above-mentioned polymer preparation both the reaction rates and the molecular weights of the polymers obtained play a major role. On the one hand it is desirable to aim at the highest possible reaction rate in the polymer preparation, on the other hand, - with a view to their potential applicability - these polymers are more valuable as their molecular weights are higher. Both the reaction rate and the molecular weight can be affected by the temperature used during the polymerization process. Unfortunately, the effect the temperature has on the reaction rate is opposite to its effect on the molecular weight in that at otherwise similar reaction conditions an increase in the reaction temperature results in an increase in reaction rate, but a decrease in molecular weight of the polymers obtained. With a view to the applications envisaged for these polymers this will in practice resolve itself into the reaction temperature being chosen such as to lead to polymers which have molecular weights that are high enough for the relevant application and the reaction rate that goes with this temperature being taken into the bargain.

The Applicants have surprisingly found that the performance of the afore-said catalysts could be enhanced by substituting at least one of the hydrogen atoms of at least one of the hydrocarbon groups $R^1$, $R^2$, $R^3$ and $R^4$ present in the bidentate ligand with a polar substituent. Comparison of the performance of the original catalyst compositions in which the groups $R^1$, $R^2$, $R^3$ and $R^4$ contain only carbon and hydrogen, with that of the modified catalyst compositions in which at least one of the groups $R^1$, $R^2$, $R^3$ and $R^4$ includes at least one polar group, shows that at similar reaction rates for both compositions, polymers with higher molecular weights can be prepared by using the modified compositions, and conversely that when these compositions are both used to prepare polymers with equal molecular weights, the modified compositions show a higher reaction rate.

The modified catalyst compositions are novel.

The present patent application therefore relates to novel catalyst compositions comprising:

a) a compound of a Group VIII metal chosen from palladium, cobalt and nickel,

b) an anion of an acid with a pKa of less than 6, and

c) a bidentate ligand of the general formula $R^1R^2-M-R-M-R^3R^4$, wherein M represents phosphorus, arsenic or antimony, R represents a bivalent organic bridging group having two or three carbon atoms in the bridge and $R^1$, $R^2$, $R^3$ and $R^4$ represent hydrocarbon groups which may or may not be substituted with polar groups, characterized in that at least one hydrogen atom in at least one of the groups $R^1$, $R^2$, $R^3$ and $R^4$ is substituted with a polar substituent.

The patent application further relates to the use of these catalyst compositions in the preparation of polymers of carbon monoxide with ethene and, if appropriate, also one or more other olefinically unsaturated hydrocarbons.

The preferred Group VIII metal compound present in the catalyst composition is a palladium compound. Very suitable are palladium salts of carboxylic acids and in particular palladium acetate. Examples of suitable acids with pKa of less than 6 (determined in aqueous solution at 18 °C) are sulphonic acids, such as methanesulphonic acid, trifluoromethanesulphonic acid and para-toluenesulphonic acid and carboxylic acids, such as trichloroacetic acid, difluoroacetic acid, trifluoroacetic acid, monochloroacetic acid, difluoropropionic acid, acetic acid, tartaric acid, 2,5-dihydroxybenzoic acid, hydrochloric acid, hydrofluoric acid and hydrobromic acid. Preferred are all acids with a pKa of less than 4, acids with pKa of less than 2 perform even better. Most preference is given to para-toluenesulphonic acid and trifluoroacetic acid. The preferred quantity of the anion of the acid with a pKa of less than 6 present in the catalyst compositions is of from 0.5 to 200 and in particular of from 1.0 to 100 equivalents per gram atom of Group VIII metal. In the bidentate ligand M is preferably phosphorus. The preferred quantity of bidentate ligand present in the catalyst composition is of from 0.1-2 and in particular of from 0.9-1.1 mol per mol of Group VIII metal compound. The bivalent organic bridging group R preferably contains three carbon atoms in the bridge.

The groups $R^1$, $R^2$, $R^3$ and $R^4$ present in the bidentate ligand each preferably contain 6 to 14 carbon atoms. Especially preferred are bidentate ligands in which each one of the groups $R^1$, $R^2$, $R^3$ and $R^4$ contains an aryl group which is directly linked to the M atom. In at least one of the groups $R^1$, $R^2$, $R^3$ and $R^4$ at least one hydrogen atom is substituted with a polar substituent. Eligible polar substituents are amongst others halogens and groups of the general formulae $R^5$-O-, $R^5$-S-, $R^5$-CO-, $R^5$-CO-O-, $R^5$-CO-NH, $R^5$-CO-$NR^6$-, $R^5 R^6$-N-CO- and $R^5$-O-CO-NH- and $R^5$-O-CO-$NR^6$-, wherein $R^5$ and $R^6$ represent similar or dissimilar alkyl or aryl groups. Preference is given to bidentate ligands in which the polar substituents occuring in the groups $R^1$, $R^2$, $R^3$ and $R^4$ are alkoxy groups and in particular methoxy groups. Further, bidentate ligands are preferred in which each one of the groups $R^1$, $R^2$, $R^3$ and $R^4$ contains one polar substituent. Finally, preference is given to bidentate ligands in which the groups $R^1$, $R^2$, $R^3$ and $R^4$ are similar to one another. Very suitable bidentate ligands are 1,3-bis(di-4-methoxyphenylphosphine)-propane and 2-methyl-2-(methyldi-4-methoxyphenylphosphine)-1,3-bis(di-4-methoxyphenylphosphine)propane.

The polymerization by using the catalyst compositions according to the invention is preferably carried out in a liquid diluent. Very suitable liquid diluents are lower alcohols, such as methanol and ethanol. The quantities of catalyst composition used in the preparation of the polymers may vary within wide limits. Per mol of olefinically unsaturated hydrocarbon to be polymerized, a quantity of catalyst composition is used which preferably contains $10^{-7}$-$10^{-3}$ and in particular $10^{-6}$-$10^{-5}$ gram atom of Group VIII metal. The preparation of the polymers by using the catalyst compositions according to the invention is preferably carried out at a temperature of 20-150 °C and a pressure of 1-200 bar and in particular at a temperature of 30-100 °C and a pressure of 20-100 bar.

The catalyst compositions according to the invention may be used for preparing polymers of carbon monoxide with ethene as well as for preparing polymers of carbon monoxide with ethene and in addition one or more other olefinically unsaturated hydrocarbons. The latter olefinically unsaturated hydrocarbons preferably have the general formula $CHR_1 = CHR_2$ wherein the groups $R_1$ and $R_2$ together contain fewer than 18 carbon atoms and wherein either one of the groups $R_1$ and $R_2$ is a hydrocarbon group while the other is hydrogen or also a hydrocarbon group. In the latter case, $R_1$ and $R_2$ may together form part of a cyclic structure, as in the monomers cyclopentene and cyclohexene. In so far as the groups $R_1$ and $R_2$ are hydrocarbon groups, preference is given to alkyl groups. Especially preferred are monomers in which either one of the groups $R_1$ and $R_2$ is hydrogen while the other is an alkyl group and more in particular a methyl group. In the mixture to be polymerized the molar ratio of the olefinically unsaturated hydrocarbons relative to carbon monoxide is preferably 10:1-1:5 and in particular 5:1-1:2.

According as the polymers prepared according to the invention have higher molecular weights, their intrinsic viscosities too will as a rule be higher. In order to determine the intrinsic viscosity of a polymer prepared according to the invention, four solutions are prepared by dissolving the polymer in m-cresol at 100 °C, at four different concentrations. Then the viscosity at 100 °C of each of these solutions relative to that of m-cresol at 100 °C is determined in a viscometer. When $T_o$ represents the efflux time of m-cresol and $T_p$ the efflux time of the polymer solution, the relative viscosity ($\eta_{rel}$) is determined by

$$\eta_{rel} = \frac{T_p}{T_o} .$$

The inherent viscosity ($\eta_{inh}$) can be calculated from $\eta_{rel}$, according to the formula:

$$\eta_{inh} = \frac{\ln \eta_{rel}}{C},$$

wherein c represent the polymer concentration as grams per 100 ml of solution. Plotting of the $\eta_{inh}$ found for each of the four polymer solutions against the corresponding concentration (c) and subsequent extrapolation to c = 0 leads to the intrinsic viscosity [$\eta$] as dl/g, which will hereinafter be referred to not as 'intrinsic viscosity', but by the designation recommended by the International Union of Pure and Applied Chemistry of 'Limiting Viscosity Number' (LVN). The polymers prepared according to the invention normally have an LVN between 0.2 and 5.0 dl/g. Preference is given to polymers with an LVN between 0.3 and 4.5 dl/g and in particular to polymers with an LVN between 0.4 dl/g and 4.0 dl/g.

The invention will now be illustrated with the aid of the following examples.

## Example 1 (for comparison)

A carbon monoxide/ethene copolymer was prepared as follows. 200 ml of methanol was introduced into a mechanically stirred autoclave of 300 ml capacity. The air present in the autoclave was expelled therefrom by pressurizing the autoclave with carbon monoxide until a pressure of 50 bar was reached and then releasing the pressure and repeating this procedure twice over. After the contents of the autoclave had been brought to a temperature of 65 °C, a 1:1 carbon monoxide/ethene mixture was introduced into the autoclave until a pressure of 55 bar was reached. A catalyst solution was then introduced into the autoclave, consisting of:
6 ml methanol,
0.02 mmol palladium acetate,
0.02 mmol 1,3-bis(diphenylphosphine)propane and
0.04 mmol p-toluenesulphonic acid.
The pressure was maintained at 55 bar by introducing under pressure a 1:1 carbon monoxide/ethene mixture. After 3 hours the polymerization was stopped by cooling the reaction mixture down to room temperature and releasing the pressure. The copolymer was filtered off, washed with methanol and dried at 70 °C. In this way a copolymer having an LVN of 0.95 dl/g was prepared at a reaction rate of 1.3 kg copolymer/g palladium/hour.

## Example 2 (for comparison)

A carbon monoxide/ethene copolymer was prepared in substantially the same way as the copolymer in Example 1, except that in this case instead of a temperature of 65 °C, a temperature of 85 °C was employed. Thus a copolymer having an LVN of 0.52 dl/g was prepared at a reaction rate of 5.0 kg copolymer/g palladium/hour.

## Example 3

A carbon monoxide/ethene copolymer was prepared in substantially the same way as the copolymer in Example 1, except that in this case instead of 1,3-bis(diphenylphosphine)propane, 1,3-bis(di-p-methoxyphenylphosphine)propane was used. Thus a copolymer having an LVN of 1,4 dl/g was prepared at a reaction rate of 0.8 kg copolymer/g palladium/hour.

## Example 4

A carbon monoxide/ethene copolymer was prepared in substantially the same way as the copolymer in Example 1, except for the following differences:
a) instead of temperature of 65 °C, a temperature of 85 °C was employed, and
b) instead of 1,3-bis(diphenylphosphine)propane, 1,3-bis(di-p-methoxyphenylphosphine)propane was used.
Thus a copolymer having an LVN of 1.0 dl/g was prepared at a reaction rate of 3.2 kg copolymer/g palladium/hour.

By $^{13}$C-NMR analysis the carbon monoxide/ethene copolymers prepared according to Examples 1-4 were shown to possess a linear alternating structure and to consist of units of the formula $-CO-(C_2H_4)-$. The copolymers had a melting point of 257 °C. Of Examples 1-4, only Examples 3 and 4 are examples according to the invention. Examples 1 and 2 fall outside the scope of the invention and have been included for comparison.

Comparison of Example 1 with Example 2 (both carried out using a catalyst composition in which the groups $R^1$, $R^2$, $R^3$ and $R^4$ in the bidentate ligand are hydrocarbon groups) and comparison of Example 3 with Example 4 (both carried out using a catalyst composition in which each one of the groups $R^1$, $R^2$, $R^3$ and $R^4$ in the bidentate ligand contains a methoxy group as polar substituent) demonstrates the influence of the reaction temperature both on the reaction rate and on the molecular weights of the prepared polymers. According to Examples 1 and 4 polymers are prepared which have about the same molecular weights. However, in Example 4, which was carried out using a catalyst composition according to the invention, the reaction rate obtained was considerably higher than in Example 1.

**Claims**
**Claims for the following Contracting States :**
**BE, CH, DE, FR, GB, IT, LI, LU, NL, SE**

1. Catalyst compositions comprising:
   a) a compound of a Group VIII metal chosen from palladium, cobalt and nickel,
   b) an anion of an acid with a pKa of less than 6, and
   c) a bidentate ligand of the general formula $R^1R^2-M-R-M-R^3R^4$, wherein M represents phosphorus, arsenic or antimony, R is a bivalent organic bridging group containing two or three carbon atoms in the bridge, and $R^1$, $R^2$, $R^3$ and $R^4$ represent hydrocarbon groups which may or may not be substituted with polar substituents,

characterized in that at least one hydrogen atom in at least one of the groups $R^1$ $R^2$, $R^3$ and $R^4$ is substituted with a polar substituent.

2. Catalyst compositions as claimed in claim 1, characterized in that the Group VIII metal compound is a palladium acetate.

3. Catalyst compositions as claimed in claim 1 or 2 in which the acid has a pKa of less than 4.

4. Catalyst compositions as claimed in claim 3 in which the acid has a pKa of less than 2.

5. Catalyst compositions as claimed in claim 4, characterized in that the acid is a sulphonic acid or a carboxylic acid.

6. Catalyst compositions as claimed in any one of claims 1-5, characterized in that the bivalent organic bridging group R contains three carbon atoms in the bridge.

7. Catalyst compositions as claimed in any one of claims 1-6, characterized in that M in the bidentate ligand represents phosphorus.

8. Catalyst compositions as claimed in any one of claims 1-7, characterized in that the polar substituents occurring in the groups $R^1$, $R^2$, $R^3$ and $R^4$ are alkoxy groups such as methoxy groups.

9. Catalyst compositions as claimed in any one of claims 1-8, characterized in that the bidentate ligand is 1,3-bis(di-p-methoxyphenylphosphine)propane.

10. Process for the preparation of polymers, characterized in that a mixture of carbon monoxide and ethene and, if appropriate, also one or more other olefinically unsaturated hydrocarbons, is polymerized by using a catalyst composition as claimed in any one of claims 1-9.

11. Process as claimed in claim 10, characterized in that in the mixture to be polymerized the molar ratio of the olefinically unsaturated hydrocarbons relative to carbon monoxide is 5:1-1:2.

12. Process as claimed in claim 10 or 11, characterized in that the polymerization is carried out in a liquid diluent, such as a lower alcohol, at a temperature of 30-100 °C and a pressure of 20-100 bar.

**Claims for the following Contracting States :
AT, ES**

1. Process for the preparation of catalyst compositions, which process comprises contacting :-

   a) a compound of a Group VIII metal chosen from palladium, cobalt and nickel,
   b) an anion of an acid with a pKa of less than 6, and
   c) a bidentate ligand of the general formula $R^1R^2$-M-R-M-$R^3R^4$, wherein M represents phosphorus, arsenic or antimony, R is a bivalent organic bridging group containing two or three carbon atoms in the bridge, and $R^1$, $R^2$, $R^3$ and $R^4$ represent hydrocarbon groups which may or may not be substituted with polar substituents,

   characterized in that at least one hydrogen atom in at least one of the groups $R^1$, $R^2$, $R^3$ and $R^4$ is substituted with a polar substituent.

2. Process as claimed in claim 1, characterized in that the Group VIII metal compound is a palladium acetate.

3. Process as claimed in claim 1 or 2 in which the acid has a pKa of less than 4.

4. Process as claimed in claim 3 in which the acid has a pKa of less than 2.

5. Process as claimed in claim 4, characterized in that the acid is a sulphonic acid or a carboxylic acid.

6. Process as claimed in any one of claims 1-5, characterized in that the bivalent organic bridging group R contains three carbon atoms in the bridge.

7. Process as claimed in any one of claims 1-6, characterized in that M in the bidentate ligand represents phosphorus.

8. Process as claimed in any one of claims 1-7, characterized in that the polar substituents occurring in the groups $R^1$, $R^2$, $R^3$ and $R^4$ are alkoxy groups such as methoxy groups.

9. Process as claimed in any one of claims 1-8, characterized in that the bidentate ligand is 1,3-bis(di-p-methoxyphenylphosphine)propane.

10. Process for the preparation of polymers, characterized in that a mixture of carbon monoxide and ethene and, if appropriate, also one or more other olefinically unsaturated hydrocarbons, is polymerized by using a catalyst composition which is prepared by a process as claimed in any one of claims 1-9.

11. Process as claimed in claim 10, characterized in that in the mixture to be polymerized the molar ratio of the olefinically unsaturated hydrocarbons relative to carbon monoxide is 5:1-1:2.

12. Process as claimed in claim 10 or 11, characterized in that the polymerization is carried out in a liquid diluent, such as a lower alcohol, at a temperature of 30-100 °C and a pressure of 20-100 bar.

**Patentansprüche**
**Patentansprüche für folgende Vertragsstaaten : BE, CH, DE, FR, GB, IT, LI, LU, NL, SE**

1. Katalysatorzusammensetzung mit einem Gehalt an
   a) einer Verbindung eines unter Palladium, Kobalt und Nickel ausgewählten Gruppe VIII-Metalles,
   b) einem Anion einer Säure mit einem pKa-Wert von kleiner als 6 und
   c) einem Bidentatliganden der allgemeinen Formel $R^1R^2$-M-R-M-$R^3R^4$, worin M für Phosphor, Arsen oder Antimon steht, R eine zweiwertige organische Brückengruppe mit zwei oder drei Kohlenstoffatomen in der Brücke bedeutet und $R^1$, $R^2$, $R^3$ und $R^4$ Kohlenwasserstoffgruppen darstellen, die durch polare Substituenten substituiert oder unsubstituiert sein können,
   dadurch gekennzeichnet, daß wenigstens ein Wasserstoffatom in wenigstens einer der Gruppen $R^1$, $R^2$, $R^3$ und $R^4$ durch einen polaren Substituenten ersetzt ist.

2. Katalysatorzusammensetzungen nach Anspruch 1, dadurch gekennzeichnet, daß die Gruppe VIII-Metallverbindung ein Palladiumacetat ist.

3. Katalysatorzusammensetzungen nach Anspruch 1 oder 2, worin die Säure einen pKa-Wert von kleiner als 4 aufweist.

4. Katalysatorzusammensetzungen nach Anspruch 3, worin die Säure einen pKa-Wert von kleiner als 2 aufweist.

5. Katalysatorzusammensetzungen nach Anspruch 4, dadurch gekennzeichnet, daß die Säure eine Sulfonsäure oder eine Carbonsäure ist.

6. Katalysatorzusammensetzungen nach einem der Ansprüche 1 bis 5, dadurch gekennzeichnet, daß die zweiwertige organische Brückengruppe R drei Kohlenstoffatome in der Brücke enthält.

7. Katalysatorzusammensetzungen nach einem der Ansprüche 1 bis 6, dadurch gekennzeichnet, daß M im Bidentatliganden für Phosphor steht.

8. Katalysatorzusammensetzungen nach einem der Ansprüche 1 bis 7, dadurch gekennzeichnet, daß die in den Gruppen $R^1$, $R^2$, $R^3$ und $R^4$ vorliegenden polaren Substituenten Alkoxygruppen wie Methoxygruppen sind.

9. Katalysatorzusammensetzungen nach einem der Ansprüche 1 bis 8, dadurch gekennzeichnet, daß der Bidentatligand 1,3-Bis(di-p-methoxyphenylphosphin)propan ist.

10. Verfahren zur Herstellung von Polymeren, dadurch gekennzeichnet, daß ein Gemisch aus Kohlenmonoxid und Ethen und, falls zutreffend, auch einem oder mehreren anderen olefinisch ungesättigten Kohlenwasserstoffen unter Anwendung einer Katalysatorzusammensetzung nach einem der Ansprüche 1 bis 9 polymerisiert wird.

11. Verfahren nach Anspruch 10, dadurch gekennzeichnet, daß in dem zu polymerisierenden Gemisch das Molverhältnis der olefinisch ungesättigten Kohlenwasserstoffe zu Kohlenmonoxid von 5:1 bis 1:2 beträgt.

12. Verfahren nach Anspruch 10 oder 11, dadurch gekennzeichnet, daß die Polymerisation in einem flüssigen Verdünnungsmittel, wie einem niederen Alkohol, bei einer Temperatur von 30 bis 100°C und bei einem Druck von 20 bis 100 bar ausgeführt wird.

**Patentansprüche für folgende Vertragsstaaten : AT, ES**

1. Verfahren zur Herstellung von Katalysatorzusammensetzungen, welches Verfahren ein Zusammenbringen von
   a) einer Verbindung eines unter Palladium, Kobalt und Nickel ausgewählten Gruppe VIII-Metalles,
   b) eines Anions einer Säure mit einem pKa-Wert von kleiner als 6 und
   c) eines Bidentatliganden der allgemeinen Formel $R^1R^2$-M-R-M-$R^3R^4$, worin M für Phosphor, Arsen oder Antimon steht, R eine zweiwertige organische Brückengruppe mit zwei oder drei Kohlenstoffatomen in der Brücke bedeutet und $R^1$, $R^2$ $R^3$ und $R^4$ Kohlenwasserstoffgruppen darstellen, die durch polare Substituenten substituiert oder unsubstituiert sein können, umfaßt, dadurch gekennzeichnet, daß wenigstens ein Wasserstoffatom in wenigstens einer der Gruppen $R^1$ $R^2$ $R^3$ und $R^4$ durch einen polaren Substituenten ersetzt ist.

2. Verfahren nach Anspruch 1, dadurch gekennzeichnet, daß die Gruppe VIII-Metallverbindung ein Palladiumacetat ist.

3. Verfahren nach Anspruch 1 oder 2, worin die Säure einen pKa-Wert von kleiner als 4 aufweist.

4. Verfahren nach Anspruch 3, worin die Säure einen pKa-Wert von kleiner als 2 aufweist.

5. Verfahren nach Anspruch 4, dadurch gekennzeichnet, daß die Säure eine Sulfonsäure oder eine Carbonsäure ist.

6. Verfahren nach einem der Ansprüche 1 bis 5, dadurch gekennzeichnet, daß die zweiwertige organische Brückengruppe R drei Kohlenstoffatome in der Brücke enthält.

7. Verfahren nach einem der Ansprüche 1 bis 6, dadurch gekennzeichnet, daß M im Bidentatliganden für Phosphor steht.

8. Verfahren nach einem der Ansprüche 1 bis 7, dadurch gekennzeichnet, daß die in den Gruppen $R^1$, $R^2$, $R^3$ und $R^4$ vorliegenden polaren Substituenten Alkoxygruppen wie Methoxygruppen sind.

9. Verfahren nach einem der Ansprüche 1 bis 8, dadurch gekennzeichnet, daß der Bidentatligand 1,3-Bis(di-p-methoxyphenylphosphin)-propan ist.

10. Verfahren zur Herstellung von Polymeren, dadurch gekennzeichnet, daß ein Gemisch aus Kohlenmonoxid und Ethen und, falls zutreffend, auch einem oder mehreren anderen olefinisch ungesättigten Kohlenwasserstoffen unter Anwendung einer Katalysatorzusammensetzung polymerisiert wird, die nach einem Verfahren gemäß einem der Ansprüche 1 bis 9 hergestellt wird.

11. Verfahren nach Anspruch 10, dadurch gekennzeichnet, daß in dem zu polymerisierenden Gemisch das Molverhältnis der olefinisch ungesättigten Kohlenwasserstoffe zu Kohlenmonoxid von 5:1 bis 1:2 beträgt.

12. Verfahren nach Anspruch 10 oder 11, dadurch gekennzeichnet, daß die Polymerisation in einem flüssigen Verdünnungsmittel, wie einem niederen Alkohol, bei einer Temperatur von 30 bis 100°C und bei einem Druck von 20 bis 100 bar ausgeführt wird.

**Revendications**

**Revendications pour les Etats contractants suivants : BE, CH, DE, FR, GB, IT, LI, LU, NL, SE**

1. Compositions de catalyseur comportant :

   a) un composé d'un métal du groupe VIII choisi parmi le palladium, le cobalt et le nickel,

   b) un anion d'un acide présentant un pKa inférieur à 6, et

   c) un ligand bidenté de la formule générale $R^1R^2$-M-R-M-$R^3$-$R^4$, dans laquelle M représente du phosphore, de l'arsenic ou de l'antimoine, R est un groupe pontant bivalent organique, qui renferme deux ou trois atomes de carbone dans le pont et $R^1$, $R^2$, $R^3$ et $R^4$ représentent des groupes hydrocarbone, qui peuvent être substitués ou non par des substituants polaires, caractérisé en ce qu'au moins un atome d'hydrogène dans au moins un des groupes $R^1$, $R^2$, $R^3$ est substitué par un substituant polaire.

2. Compositions de catalyseur telles que revendiquées dans la revendication 1, caractérisées en ce que le composé de métal du groupe VIII est un acétate de palladium.

3. Compositions de catalyseur telles que revendiquées dans la revendication 1 ou 2, dans lesquelles l'acide a un pKa inférieur à 4.

4. Compositions de catalyseur telles que revendiquées dans la revendication 3, dans lesquelles l'acide a un pKa inférieur à 2.

5. Compositions de catalyseur telles que revendiquées dans la revendication 4, caractérisées en ce que l'acide est un acide sulfonique ou un acide carboxylique.

6. Compositions de catalyseur telles que revendiquées dans l'une quelconque des revendications 1 à 5, caractérisées en ce que le groupe pontant bivalent organique R renferme trois atomes de carbone dans le pont.

**7.** Compositions de catalyseur telles que revendiquées dans l'une quelconque des revendications 1 à 6, caractérisées en ce que M dans le ligand bidenté représente du phosphore.

**8.** Compositions de catalyseur telles que revendiquées dans l'une quelconque des revendications 1 à 7, caractérisées en ce que les substituants polaires se trouvant dans les groupes $R^1$, $R^2$, $R^3$ et $R^4$ sont des groupes alkoxy tels que des groupes méthoxy.

**9.** Compositions de catalyseur telles que revendiquées dans l'une quelconque des revendications 1 à 8, caractérisées en ce que le ligand bidenté est le 1,3-bis (di-p-méthoxy-phénylphosphine)propane.

**10.** Procédé pour la préparation de polymères, caractérisé en ce qu'un mélange de monoxyde de carbone et d'éthylène et, si cela est approprié, également un ou plus d'un hydrocarbure à insaturation oléfinique, est polymérisé en utilisant une composition de catalyseur telle que revendiquée dans l'une quelconque des revendications 1 à 9.

**11.** Procédé tel que revendiqué dans la revendication 10, caractérisé en ce que, dans le mélange devant être polymérisé, le rapport molaire des hydrocarbones à insaturation oléfinique par rapport au monoxyde de carbone est de 5:1 à 1:2.

**12.** Procédé tel que revendiqué dans la revendication 10 ou 11, caractérisé en ce que la polymérisation est mise en oeuvre dans un diluant liquide, tel qu'un alcool inférieur, à une température de 30 à 100°C et sous une pression de 20 à 100 bars.

**Revendications pour les Etats contractants suivants : AT, ES**

**1.** Procédé pour la préparation de compositions de catalyseur comportant:
a) un composé d'un métal du groupe VIII choisi parmi le palladium, le cobalt et le nickel,
b) un anion d'un acide présentant un pKa inférieur à 6, et
c) un ligand bidenté de la formule générale $R^1R^2\text{-M-R-M-}R^3R^4$, dans laquelle M représente du phosphore, de l'arsenic ou de l'antimoine, R est un groupe pontant bivalent organique, qui renferme deux ou trois atomes de carbone dans le pont et $R^1$, $R^2$, $R^3$ et $R^4$ représentent des groupes hydrocarbone, qui peuvent être substitués ou non par des substituants polaires, caractérisé en ce qu'au moins un atome d'hydrogène dans au moins un des groupes $R^1$, $R^2$, $R^3$ est substitué par un substituant polaire.

**2.** Procédé tel que revendiquée dans la revendication 1, caractérisé en ce que le composé de métal du groupe VIII est un acétate de palladium.

**3.** Procédé tel que revendiqué dans la revendication 1 ou 2, dans lequel l'acide a un pKa inférieur à 4.

**4.** Procédé tel que revendiqué dans la revendication 3, dans lequel l'acide a un pKa inférieur à 2.

**5.** Procédé tel que revendiqué dans la revendication 4, caractérisé en ce que l'acide est un acide sulfonique ou un acide carboxylique.

**6.** Procédé tel que revendiqué dans l'une quelconque des revendications 1 à 5, caractérisé en ce que le groupe pontant bivalent organique R renferme trois atomes de carbone dans le pont.

**7.** Procédé tel que revendiqué dans l'une quelconque des revendications 1 à 6, caractérisé en ce que M dans le ligand bidenté représente du phosphore.

**8.** Procédé tel que revendiqué dans l'une quelconque des revendications 1 à 7, caractérisé en ce que les substituants polaires se trouvant dans les groupes $R^1$, $R^2$, $R^3$ et $R^4$ sont des groupes alkoxy tels que des groupes méthoxy.

**9.** Procédé tel que revendiqué dans l'une quelconque des revendications 1 à 8, caractérisé en ce que le ligand bidenté est le 1,3-bis(di-p-méthoxy-phénylphosphine)propane.

**10.** Procédé pour la préparation de polymères, caractérisé en ce qu'un mélange de monoxyde de carbone et d'éthylène et, si cela est approprié, également d'un ou plus d'un hydrocarbure à insaturation oléfinique, est polymérisé en utilisant une composition de catalyseur qui est préparée par un procédé tel que revendiqué dans l'une quelconque des revendications 1 à 9.

**11.** Procédé tel que revendiqué dans la revendication 10, caractérisé en ce que, dans le mélange devant être polymérisé, le rapport molaire des hydrocarbones à insaturation oléfinique par rapport au monoxyde de carbone est de 5:1 à 1:2.

12. Procédé tel que revendiqué dans la revendication 10 ou 11, caractérisé en ce que la polymérisation est mise en oeuvre dans un diluant liquide, tel qu'un alcool inférieur, à une température de 30 à 100°C et sous une pression de 20 à 100 bars.